# EUROPEAN PATENT SPECIFICATION

(11) **EP 3 059 689 B1**
(45) Date of publication and mention of the grant of the patent: **02.05.2018**
(21) Application number: 13895604.0
(22) Date of filing: 30.10.2013
(51) Int. Cl.: G06F 21/31, G06F 3/0488, G06F 3/0482, G06F 3/0484

(54) **AUTHENTICATION APPARATUS AND AUTHENTICATION METHOD**
AUTHENTIFIZIERUNGSVORRICHTUNG UND AUTHENTIFIZIERUNGSVERFAHREN
APPAREIL D'AUTHENTIFICATION ET PROCÉDÉ D'AUTHENTIFICATION

(30) Priority: 17.10.2013 CN 201310487970
(43) Date of publication of application: 24.08.2016
(73) Proprietor: Smart Electronic Industrial (Dong Guan) Co. Ltd., Dongguan, Guangdong 523750 (CN); Zheng Li, Dong Guan, Guangdong 523750 (CN)
(72) Inventor: ZHENG, Li, Dong Guan Guangdong 523750 (CN)
(74) Representative: Rüger, Barthelt & Abel
(86) International application number: PCT/CN2013/086237
(87) International publication number: WO 2015/054934

(56) References cited:
- WO-A2-2004/077194
- WO-A2-2013/077909
- CN-A- 1 892 542
- CN-A- 101 183 941
- CN-A- 101 442 410
- US-A- 5 428 349
- US-B1- 8 117 652

## Description

### FIELD OF THE INVENTION

The present invention relates to an electronic safety protection technology and more particularly, relates to an authenticating device and related authenticating method.

### BACKGROUD OF THE INVENTION

With continuous improvement of people life quality and deep understanding of safety, authenticating device and related authenticating method have been widely used in various areas of people life. In a typical situation, presently almost every person owns at least one mobile phone or tablet computer and in these devices, employment of authenticating methods may be often found. In fact, this is specific utilization of authentication apparatuses. For a mobile terminal, a display screen based on touch-feedback principle is generally provided. The most convenient manners may include slide-unlock, face-unlock, unlock by drawing a particular pattern in a nine-grid screen and the like all of which are well known publicly. All these manners suffer from some drawbacks. For example, slide-unlock may be seen by others completely; face-unlock may be cracked by static image; and unlock by drawing a particular pattern in a nine-grid screen is indeed a variation of nine-grid numerical keyboard and, it may also be easily seen by others and thus be cracked. Apparently, these prior art authenticating method used in mobile terminals all lack of sufficient safety and reliability and therefore are susceptible to being cracked by intentional peeping.

Earlier authentication technology was mostly performed mechanically. For instance, combination lock extensively shown in kinds of bags and suitcases is also one of authenticating device. This kind of authentication apparatus running mechanically similarly suffers from well-known disadvantages and as a result, electronic authentication apparatuses will gradually replace the mechanical authentication apparatuses. As such, password authentication apparatuses may be applied not only in various electronic mobile terminals, but also in other situations where password verification is necessary. For example, kinds of travel bags, suitcases may use verification device in their electronic lock verification mechanism. Take another example, domestic electronics such as smart TV, router capable of human-machine interaction or central control device may use above device in their verification procedure. Take a further example; the above authentication apparatus may also find its application in access control system, electronic locks of a vending machine, strongbox, and automobile gate. It may even be used in any new products that may immerge in future and that may require verification of password. Understandingly, authenticating device is so important that it have great influence on various aspects of human life. Accordingly, it is desired to provide a good authenticating device and corresponding method in pursuit of higher and higher safety.

As described above however, though the authenticating device is much important, currently available authenticating methods are not so satisfactory. During industry design process, designers should consider not only performance and safety of the product as discussed above, but also production cost and convenience of the product. Therefore, how to balance among these industrial factors has become a driving force to continuously improve authenticating techniques have been advanced gradually.

WO 2004/077194 A2 discloses a password input method wherein a character set comprising the set of characters of the known password is divided into subsets that are displayed for selection.

### SUMMARY OF THE INVENTION

The object of the invention is to overcome drawbacks of prior art technology and provide an authenticating device and method, which have high safety and are easy to use and have good concealment.

The invention provides an authentication method as defined in the appended claims.

To above end, the following technical solution is proposed.

According to the invention, an authenticating method for verifying password input by a user includes the following steps:
(1) corresponding to a known character set contained in a predefined password, defining a candidate character set constructed by a plurality of characters, said known character set being a subset of the candidate character set;
(2) randomly distributing all the characters of the candidate character set into a plurality of candidate character subsets such that at least one candidate character subset includes two or more characters, and correspondingly distributing and displaying characters of the candidate character subsets in a plurality of interactive regions respectively; and
(3) receiving from the user instructions regarding selection of specific interactive regions based on the characters of the known character sets, checking one by one whether each character of the known character set belongs to the candidate character subsets corresponding to the specific interactive regions currently selected by the user, and confirming successful authentication and outputting signals indicating successful authentication when all the characters of the known character set belong to the candidate character subsets corresponding to the specific interactive regions currently selected by the user.

For each character of the known character set, a candidate character subset may be provided to each character of the known set. Alternatively, characters contained in each candidate character subset may be changed for each character of the known set, thus providing a candidate character subset to each character of the known set. Specifically, the step (2) is performed before checking of each character of the known character set such that each candidate character subset corresponding to a respective interactive region is updated for each character.

Preferably, in the step (2), all the characters of respective candidate character set are randomly generated and discretely distributed. Preferably, in the step (1), the known character set is equivalent to the collection of all the candidate character subsets, whereas in the step (2), each candidate character subset includes two or more characters.

Following one embodiment of the invention, each interactive region is used for receiving touching action of the user to confirm this action as the user's instructions of selecting a corresponding interactive region. Following another embodiment of the invention, each interactive region is associated with a corresponding input circuit and, switching on of each input circuit is transformed into instructions of selection of an interactive region associated with the input circuit.

According to one embodiment of the invention, in the steps (2) and (3), according to default order of all characters in the known character set, for each character, several interactive regions are determined based on aforementioned method and selection of specific interactive regions by the user is received; after selection by the user, it is checked whether a current character belongs to a candidate character subset corresponding to a specific interactive region currently selected by the user; current checking result is set as a temporary label; and it is determined based on the temporary label that authentication is successful if no character is labeled as authentication failure.

According to another embodiment of the invention, in the steps (2) and (3), according to default order of all characters in the known character set, for each character, several interactive regions are determined based on aforementioned method and selection of specific interactive regions by the user is received; correlation data between the candidate character subset corresponding to a specific interaction region selected currently by the user and current character is established and stored, the same establishing and storing operation is performed for the next character until the last one; after selection instructions are performed by the user for all the characters of the known character set, all correlation data are used, and each correlation data is checked to determine whether a current character contained in the correlation data belongs to the candidate character subset contained in the same correlation data, and current checking result is set as a temporary label; and it is determined based on the temporary label that authentication is successful if no character is labeled as authentication failure.

To reduce checking procedure, in a varied embodiment of the invention, corresponding to any character of the known character set, when it is checked that the current character is not within the candidate character subset corresponding to a specific interactive region selected presently by the user, the method is ended to stop performing succeeding steps.

According to the invention, an authenticating device for realizing the method as recited above, includes a control unit, a memory unit, and a touch screen, said memory unit storing the predefined password containing the known character set therein, wherein the control unit is intended to execute a program implemented by said method; the memory unit is intended to store a candidate intermediate data generated by the program implemented by said method; and the touch screen is intended to provide said interactive regions to the program implemented by said method, to receive the user's selection of the interactive regions and transform said selection into instructions indicating selection of the specific interactive regions.

According to the invention, another authenticating device for realizing the method as recited above, includes a control unit, a memory unit, a number of input circuits, and a screen, said memory unit storing the predefined password containing the known character set therein, wherein the control unit is intended to execute a program implemented by said method; the memory unit is intended to store a candidate intermediate data generated by the program implemented by said method; the touch screen is intended to provide said interactive regions to the program implemented by said method; and the input circuits are electrically connected to the control unit such that each input circuit corresponds to a respective interactive region, and each input circuit is intended to transform switching on of itself to instructions indicating selection of the specific interactive regions.

The present invention brings following good effects when compared with prior art technology.

In this invention, each character contained in a predefined password is taken as a subset. By providing candidate character sets containing characters of the same number as or more than those characters contained in the predefined password, primary fuzziness has been produced for password. Furthermore, before authenticating a first character or each character of the predefined password, the candidate character set is by default or randomly divided into multiple subsets, and these subsets are displayed in respective multiple interactive regions, such that the user can select these regions. As such, selection of a specific interactive region by the user is corresponding to multiple character elements, and each time the user makes selection, arrangement and combination of the character elements of respective interactive regions for the user may be different, thus fuzziness of the selected characters is greatly enhanced. Even in case that the click selection operation of the user during password verifying process is looked by others, the later will still not be able to ascertain the accurate password sequence, thus greatly improving safety of the password verification. At the other hand, after several characters are randomly sorted into multiple groups, each group may contain more than one character. In this situation, the user no longer relies upon buttons (area) to input the password, the number of the buttons being the same as that of the interactive regions. The number of a conventional buttons is decreased to that of the interactive regions of the invention. Accordingly, operation convenience is improved for the user. In addition, the safety effect is not affected at all.

### BRIEF DESCRIPTION OF THE DRAWINGS

Figure 1 shows a schematic view of an electrical structure of an authenticating device of the invention; and
Figure 2 shows an operation interface of the authenticating device of the invention.

### DETAILED DESCRIPTION OF THE INVENTION

Various embodiments of the invention are described below in greater details with reference to the drawings.

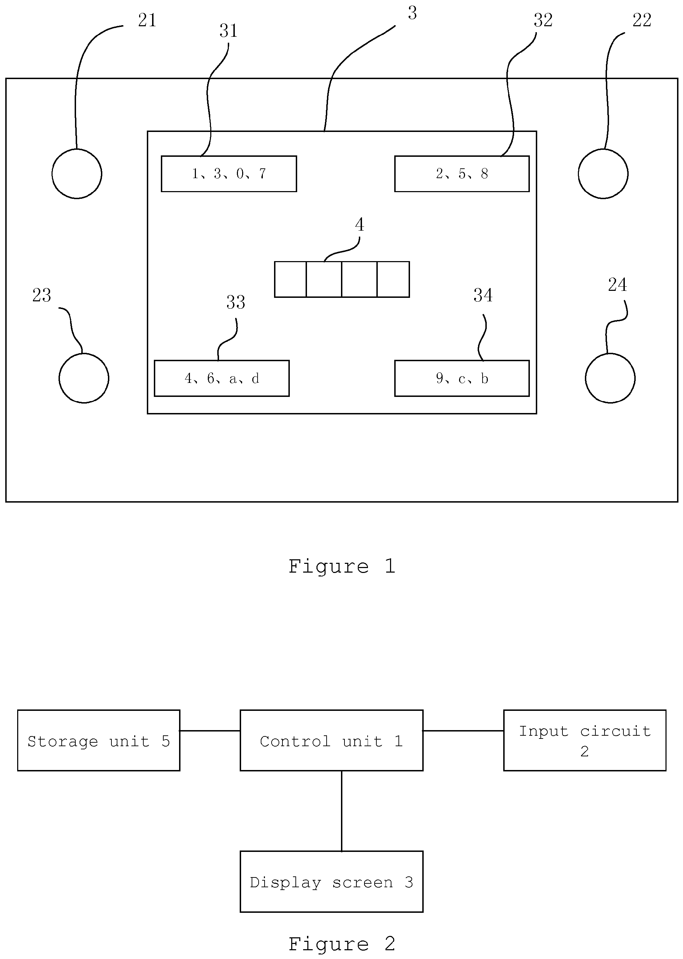

Referring to figure 1, an authenticating device of the invention of the invention includes a control unit 1, a memory unit 5, a display screen 3 and several input circuits 2. The control unit 1 operates to control the entire device and mainly serves to perform a program obtained according to authenticating method of the invention so as to perform authenticating process. The memory unit 5 functions to permanently or temporarily store various intermediate data generated during operation of the program obtained according to the authenticating method of the invention. The intermediate data may include for example user's predefined password, part or full of candidate information units and selection information units to be formed subsequently. The memory unit 5 may also store predefined labels such as image, voice and status which may be involved during storage program. Person of the art should be noted that the predefined password of the present method and device should be permanently stored. Regarding other data used in the method of the invention, it is determined flexibly by the program whether this data should be stored in the memory unit. Therefore, use of the memory unit in the invention should not be understood as having limitation to the storage technology used in this invention. Under the control of the control unit 1, the authenticating method of the invention realizes human-machine interaction by means of the input circuits 2 and display screen to realize password verification operation of the invention.

In the interface of figure 1, a display screen 3 including four corners and a central area is shown. There are four interactive regions 31-34 located at four corners of the display area respectively for displaying all elements of four candidate sets for the user. Each element is a character. An output area 4 located at the center of the display screen is mainly intended for indicating verification progress during password input process by the user. It is noted that in the invention there is no any limit regarding location of the interactive regions as would be understood by person of the art.

Four circular buttons located close to the four interactive regions of the display screen are buttons 21-24 of the four input circuits 2 for switching on these circuits 2 respectively, so that the control unit 1 is able to detect switching on of a specific input circuit 2 and then transform it into instruction of selecting an interactive region associated with the input circuit (button). By this manner, user input is accepted. Accordingly it is evident that selection of a specific interactive region may be done by pressing a corresponding button adjacent to the same corresponding interactive region.

The above implementation manners are often seen on bags, suitcases, and POS terminals. According to a different implementation manner, the input circuit 2 may be simplified, and display screen may be implemented by a widely used touch screen having touch function. As such, the device and method of the instant invention may be combined with various mobile terminals.

No matter how the hardware is optimized and selected, implementation of the authenticating method of the invention will not be such limited.

The authenticating method of the invention is based on following general principles.

At first, a memory unit stores the predefined password of the user and, input means of the predefined password may be flexibly configured by person of the art. It is well known that a password is generally constructed of characters. A simple password may include 10 numbers 0-9. Of course, it may also be constructed of other characters such as English letters. For convenience of description of the invention, it is assumed that characters such as 0-9 and English letters a-d and the like are presented in figure 2. Each password sequence may be regarded as a known set of characters and each character is an element of the set. Of course, the password sequence should be arranged according to certain order. In the method of the invention, a candidate character set is defined for the password sequence composed of multiple known characters arranged according to certain order. In this set, all the characters of the password sequence, i.e., all the elements of the known set should be included therein. In other words, the set of known characters is a subset of the candidate character set. The candidate character set is obtained by extending all elements of the set of known characters. This is because when the user presets a password, normally some of a group of characters are selected. As such, in general a candidate character set is not completely equal to the known set of characters. However, the present invention does not exclude situations where the two sets are completely equal to each other. According to mathematics, complete equality is a specific example of inclusion.

Next, after the candidate character set and known set of characters are defined, corresponding to each element of the known set of character, all the elements of the candidate character set are randomly distributed into several candidate character subsets. Ensure that at least one candidate character subset includes two or more elements. The elements of each candidate character subset are correspondingly distributed into and displayed by several interactive regions. For example, four groups of characters displayed by respective four interactive regions are irregularly arranged. It is noted that randomly arranged four groups of characters follow some regularity such as ASCII code, natural number and the like, this situation should be understood as a specific example of the random distribution of the invention and should not be excluded from the present invention. There are totally 14 characters in the four interactive regions and belong to four candidate character subsets. As these 14 characters are grouped into four candidate character subsets, generally each candidate character subset necessarily contains multiple character elements. This ensures multi-vocal expression after each candidate character subset is displayed in a corresponding interactive region. Choosing of this specific candidate character subset will not certainly be directed to a unique character, thus significantly improving safety. In case that the several characters of the candidate character set are distributed to multiple subsets and the number of the subsets is smaller than that of the characters of the candidate character set, at least one candidate character subset will contain two or more character elements. Or, some candidate character subsets may contain no characters, while rest of the candidate character subsets contain all characters of the candidate character set. This will also ensure that at least one candidate character subset will contain two or more character elements. In theory, as long as only one candidate character subset contains more than one character elements, authentication process will definitely be multi-vocal and the objects of the invention will be met. However, the preferred situation is each candidate character subset contains two or more character elements to enhance fuzziness of the password verification. Various modified embodiments of the invention may be conceived of by person of the art based on above kinds of changes and therefore, description of them is omitted herefrom.

It is noted however though there has been described a solution where corresponding to each password element of the password sequence, all elements are randomly distributed in the candidate character set, during process of authentication, contents of each candidate character subset are also updated in real time. That is, character layout presented by respective interactive regions is also updated in real time, thus guaranteeing higher safety. However, the invention also discloses the following solution. Only before verification of a password element of a first location, the candidate character sets are randomly distributed so as to form respective candidate character subsets and show characters in the four interactive regions. During subsequent password elements verifying process, the candidate character subsets are no longer updated. This solution is also feasible. Though this solution reduces complexity of computation, it still maintains multi-vocality and concealment. It will not be necessary for the user to read again contents of the other candidate character subsets for each password element and therefore this can improve convenience of password verification.

In addition, in above solution where the candidate character set is divided into multiple candidate character subsets, distribution of the elements of the candidate character subsets is random and arbitrary. However, non-random distribution of the elements is also possible in the present invention. For instance, several layout solutions in which the candidate character subsets are randomly arranged may be stored in the memory unit in advance. These different layout solutions may be ranged in accordance to certain order. Before verification of each element of the password, a different layout solution may be used according to its rank. As a result, layout solutions may be dynamically updated and it is assured that all characters in the candidate character subset of a certain solution are randomly arranged.

Next, corresponding to each element of the known character set, after dividing the candidate character set into several candidate character subsets, instruction of selecting a specific interactive region by the user is received based on respective elements of the known character set. It is then determined that whether each character of the password sequence belongs to a respective candidate character set corresponding to a specific interactive region selected currently by the user. When all the elements of the known character set belong to the candidate character subset corresponding to the specific interactive region currently selected by the user, signal indicating successful authentication is output and it is confirmed that authentication is ok. As discussed above, according to one embodiment of the invention (See figure 2), input of selection instruction of the user may be realized by clicking the buttons 21-24. According to an embodiment not shown, when a touch screen is used, clicking of a corresponding interactive region has the same effect of inputting selection instruction. Clicking action is transferred to the control unit via said touch screen and transformed into instruction of selecting a corresponding interactive region. No matter what means is used to realize selection of the interactive region, in essence it is the selection of the candidate character subset. Therefore, it means that the legal user knows the character elements shown in the interactive region and input the correct content. This operation is applied to each element. According to predefined order of the password sequence, and for each password character, the user faces selection of the interactive region, thus interactive region corresponding to each password character is obtained. For this method, authentication is achieved by check one by one whether each element of the known character set belongs to the candidate character subset corresponding to a specific interactive region selected by the user. When a current element of the known character set belongs to the candidate character subset corresponding to a specific interactive region selected currently by the user, it is confirmed that the user has input the correct password character. Otherwise, wrong password character has been input by the user. Once several selection operations match correctly all the password characters, this means the password is successfully verified. In this instance, the authenticating device of the invention outputs signal indicating successful authenticating to an external unit for further operation, such as unlocking, transaction, starting a program and the like, ending the entire process. Of course, in case the user inputs a specific password character, verifies a specific element of the known character set, but the candidate character subset corresponding to a specific interactive region fails to contain this specific element, this means authentication of this specific password character fails. For safety reason, in present method, subsequent steps may be terminated via the program, and even warning may be provided, thus ensuring safety.

Apparently, in method of the invention, though a candidate character set is divided into multiple candidate character subsets, the number of the subsets is the same as that of the interactive regions, and number of the interactive regions is smaller than that of the elements of the candidate character subsets, computation times are increased to overcome drawbacks resulted from insufficiency of numbers of the interactive regions, as each time the candidate character subset corresponding to the interactive region is updated, random re-arrangement is performed, thus ensure security.

Evidently, the method of the invention is realized by computer program. Design of the program may be flexible. To easily understand the present invention so as to easily practice the same, program implementation of the verifying method of the invention is described below with reference to the drawings.

A first kind of verification implementation:

At first, according to the arrangement order of the respective elements of the known character set (i.e., arrangement order of the password characters included in the password sequence), the following sub-steps are performed:
1. All the elements of the candidate character set are selected and divided into multiple sets each of which is a candidate character subset. The number of the subsets is the same as that of the interactive regions of the authenticating device. Preferably, each candidate character subset contains at least two elements. Next, each candidate character subset corresponds to an interactive region, and all elements of respective candidate character subsets are correspondingly arranged into respective interactive regions such that each interactive region displays several characters.
2. The program waits for user input. After reading characters shown in the candidate character subsets of respective interactive regions of the display screen, the user determines a target interactive region. The selection operation is conducted manually. After the program accepted user instruction of selecting a specific interactive region based on a current element of the known character set, it immediately check whether the current element of the known character set belongs to the displayed candidate character subset of the specific interactive region selected by the user. This checking operation may be realized by comparing the current element with the elements of the candidate character subset, as would be understood by person of the art. When the check result is affirmative, that is, when the current element belongs to the candidate character subset, set the status of a label variable working as a temporary label as authentication success, for example this label variable may be assigned the value "Y". Otherwise, it is set to be authentication failure and assigned the value "N".

The above two steps are performed for each password character. In theory, verification of each password character requires above two steps.

After completion of the above cycle, regarding all the password characters, the user has chosen respective interactive regions, meaning finish of password input. Therefore, subsequent feedback actions may be performed. Specifically, in present method, result of the authentication may depend upon status of the label variable. If the variable is still "Y", then authentication is successful, and subsequently signal showing successful authentication is output for further operation. Otherwise, the above cycle is terminated as long as the label variable is assigned "N" even for only one time. In this situation, it is confirmed that authentication fails, and signal showing failed authentication is output, and the result is fed back to the user.

A second kind of verification implementation:

At first, according to the arrangement order of the respective elements of the known character set, the following sub-steps are performed.
1. All the elements of the candidate character set are processed and divided into multiple sets each of which is a candidate character subset to be displayed in a corresponding interactive region. The number of the subsets is the same as that of the interactive regions of the authenticating device. Preferably, each candidate character subset contains at least two elements. Next, each candidate character subset corresponds to an interactive region, and all elements of respective candidate character subsets are correspondingly arranged into respective interactive regions such that each interactive region displays several characters.
2. The program waits for user input. After reading characters shown in the candidate character subsets of respective interactive regions of the display screen, the user determines a target interactive region. The selection operation is conducted manually. Different from the previous verification process, after the program accepted user instruction of selecting a specific interactive region based on a current element of the known character set, check is not performed immediately. Rather, it establishes correlation data between the current element and the candidate character subset of a respective interactive region selected by the user and stores this data into the storage unit. After that, it returns back to step 1 to verify the next password character (element), until the last character is verified. Then, the next steps are performed.

The previous cycle is ended to accept input and selection of respective password characters by the user such that all the elements of the known character set are selected by the user, thus establishing corresponding relationship among the respective elements and dynamic candidate character subsets. Consequently, new cycle may begin. Specifically, he corresponding relationship data is invoked, and it is checked whether a current element included in each group of corresponding relationship data belongs to a candidate character subset associated with said data. If the answer is yes, then the current checking result is given a temporary label, and a corresponding label variable indicates authentication success. Otherwise, if the current element fails to belong to a corresponding candidate character subset selected by the user, then the label variable indicates authentication failure. The current cycle will be ended once there is at least one verification failure as shown by the label variable. In this case, it is confirmed that authentication failed based on indication of the label variable, and signal representing authentication failure is output, thus improving program efficiency. If all the elements are checked and no authentication failure result is found, then it is confirmed that authentication is successful based on said temporary label, and signal representing authentication success is output.

It should be emphasized that various software programs may be formed due to use of different program language, different programming style and the like. The above embodiments are only for illustrative and are not for limiting the scope of the invention.

In summary, the authenticating device of the invention is based on the authenticating method of the invention. By causing fuzziness to the contents input by the user, the input contents become multi-vocal, thus ensuring the password will not be given away during input process. In addition, by randomly generating dynamical effect of the contents input by the user, password operation complexity is increased. This comprehensively and entirely improves safety and convenience of the authentication process.

Though various embodiments of the invention have been illustrated above, a person of ordinary skill in the art will understand that, variations and improvements made upon the illustrative embodiments fall within the scope of the invention, and the scope of the invention is only limited by the accompanying claims and their equivalents.

## Claims

1. An authenticating method for verifying password input by a user, comprising the following steps:
(1) corresponding to a known character set contained in a predefined password, defining a candidate character set constructed by a plurality of characters, said known character set being a subset of the candidate character set;
(2) randomly distributing all the characters of the candidate character set into a plurality of candidate character subsets such that each candidate character subset includes two or more characters, and correspondingly distributing and displaying all of the candidate character subsets in a plurality of interactive regions (31-34) respectively; and
(3) receiving from the user instructions regarding selection of specific interactive region (31-34) based on the first character of the known character set, checking whether the first character of the known character set belongs to the candidate character subset corresponding to the specific interactive region (31-34) currently selected by the user;
(4) repeat steps (2) to (3) for the remaining characters in the set of known characters, and confirming successful authentication and outputting signals indicating successful authentication when all the characters of the known character set belong to the candidate character subsets corresponding to the specific interactive regions (31-34) currently selected by the user.

2. The authenticating method as recited in claim 1, wherein in the step (1), the known character set is equivalent to the collection of all the candidate character set.

3. The authenticating method as recited in claim 1, wherein each interactive region (31-34) is used for receiving touching action of the user to confirm this action as the user' s instructions of selecting a corresponding interactive region (31-34).

4. The authenticating method as recited in claim 1, wherein each interactive region (31-34) is associated with a corresponding input circuit (2) and, switching on of each inpput circuit (2) is transformed into instructions of selection of an interactive region (31-34) associated with the input circuit (31-34).

5. The authenticating method as recited in claims 1, wherein corresponding to any character of the known character set, when it is checked that the current character is not within the candidate character subset corresponding to a specific interactive region (31-34) selected presently by the user, the method is ended to stop performing succeeding steps.

6. An authenticating device for realizing the method as recited in any one of preceding claims 1-3 and 5, comprising a control unit (1), a memory unit (5), and a touch screen (3), said memory unit (5) storing the predefined password containing the known character set therein, wherein the control unit (1) is intended to execute a program implemented by said method; the memory unit (5) is intended to store the program implemented by said method; and the touch screen (3) is intended to provide said interactive regions (31-34) to the program implemented by said method, to receive the user's selection of the interactive regions (31-34) and transform said selection into instructions indicating selection of the specific interactive regions (31-34).

## Patentansprüche

1. Authentifizierungsverfahren zur Verifikation eines durch einen Benutzer eingegebenen Passworts, das die folgenden Schritte aufweist:
(1) entsprechend einem bekannten Zeichensatz, der in einem vordefinierten Passwort enthalten ist, Definieren eines durch mehrere Zeichen gebildeten Kandidatenzeichensatzes, wobei der bekannte Zeichensatz ein Teilsatz des Kandidatenzeichensatzes ist;
(2) willkürliches Verteilen all der Zeichen des Kandidatenzeichensatzes in mehrere Kandidatenzeichenteilsätze, so dass jeder Kandidatenzeichenteilsatz zwei oder mehrere Zeichen enthält, und entsprechendes Verteilen und Anzeigen all der Kandidatenzeichenteilsätze jeweils in mehreren interaktiven Regionen (31-34); und
(3) Empfangen, von dem Benutzer, von Anweisungen bezüglich einer Auswahl einer speziellen interaktiven Region (31-34) auf der Basis des ersten Zeichens des bekannten Zeichensatzes, Überprüfen, ob das erste Zeichen des bekannten Zeichensatzes zu dem Kandidatenzeichenteilsatz gehört, das der durch den Benutzer aktuell ausgewählten speziellen interaktiven Region (31-34) entspricht;
(4) Wiederholen der Schritte (2) bis (3) für die restlichen Zeichen in dem Satz bekannter Zeichen und Bestätigen einer erfolgreichen Authentifizierung und Ausgeben von Signalen, die eine erfolgreiche Authentifizierung anzeigen, wenn all die Zeichen des bekannten Zeichensatzes zu den Kandidatenzeichenteilsätzen gehören, die den durch den Benutzer aktuell ausgewählten speziellen interaktiven Regionen (31-34) entsprechen.

2. Authentifizierungsverfahren nach Anspruch 1, wobei in dem Schritt (1) der bekannte Zeichensatz der Sammlung des gesamten Kandidatenzeichensatzes entspricht.

3. Authentifizierungsverfahren nach Anspruch 1, wobei jede interaktive Region (31-34) zum Empfang einer Berührungsaktion des Benutzers verwendet wird, um diese Aktion als die Anweisungen des Benutzers zur Auswahl einer entsprechenden interaktiven Region (31-34) zu bestätigen.

4. Authentifizierungsverfahren nach Anspruch 1, wobei jede interaktive Region (31-34) einem zugehörigen Eingangsschaltkreis (2) zugeordnet ist und ein Einschalten jedes Eingangsschaltkreises (2) in Anweisungen zur Auswahl einer dem Eingangsschaltkreis (31-34) zugeordneten interaktiven Region (31-34) umgesetzt wird.

5. Authentifizierungsverfahren nach Anspruch 1, wobei entsprechend jedem Zeichen des bekannten Zeichensatzes, wenn überprüft wird, dass das aktuelle Zeichen nicht innerhalb des Kandidatenzeichenteilsatzes enthalten ist, das einer durch den Benutzer aktuell ausgewählten speziellen interaktiven Region (31-34) entspricht, das Verfahren beendet wird, um die Durchführung nachfolgender Schritte zu unterbinden.

6. Authentifizierungsvorrichtung zur Realisierung des Verfahrens nach einem beliebigen der vorhergehenden Ansprüche 1-3 und 5, die eine Steuereinheit (1), eine Speichereinheit (5) und einen Berührungsbildschirm (3) aufweist, wobei die Speichereinheit (5) das vordefinierte Passwort speichert, in dem der bekannte Zeichensatz enthalten ist, wobei die Steuereinheit (1) dazu bestimmt ist, ein durch das Verfahren implementiertes Programm auszuführen; wobei die Speichereinheit (5) dazu bestimmt ist, das durch das Verfahren implementierte Programm zu speichern; und wobei der Berührungsbildschirm (3) dazu bestimmt ist, die interaktiven Regionen (31-34) für das durch das Verfahren implementierte Programm bereitzustellen, um die Benutzerauswahl der interaktiven Region (31-34) zu empfangen und die Auswahl in Anweisungen umzusetzen, die eine Auswahl der speziellen interaktiven Regionen (31-34) anzeigen.

## Revendications

1. Procédé d'authentification pour vérifier un mot de passe saisi par un utilisateur, comprenant les étapes suivantes :
(1) en correspondance avec un ensemble de caractères connus contenus dans un mot de passe prédéfini, définir un ensemble de caractères candidats constitué d'une pluralité de caractères, ledit ensemble de caractères connus étant un sous-ensemble de l'ensemble de caractères candidats ;
(2) distribuer aléatoirement tous les caractères de l'ensemble de caractères candidats dans une pluralité de sous-ensembles de caractères candidats de manière que chaque sous-ensemble de caractères candidats comprenne deux caractères ou plus, et de manière correspondante, distribuer et afficher tous les sous-ensembles de caractères candidats dans une pluralité de régions interactives (31-34), respectivement ; et
(3) recevoir de l'utilisateur des instructions concernant la sélection d'une région interactive spécifique (31-34) basée sur le premier caractère de l'ensemble de caractères connus, et contrôler si le premier caractère de l'ensemble de caractères connus appartient au sous-ensemble de caractères candidats correspondant à la région interactive spécifique (31-34) actuellement sélectionnée par l'utilisateur ;
(4) répéter les étapes (2) à (3) pour les caractères restants de l'ensemble de caractères connus, et confirmer une authentification réussie et délivrer des signaux indiquant l'authentification réussie quand tous les caractères de l'ensemble de caractères connus appartiennent aux sous-ensembles de caractères candidats correspondant aux régions interactives spécifiques (31-34) actuellement sélectionnées par l'utilisateur.

2. Procédé d'authentification selon la revendication 1, dans lequel à l'étape (1), l'ensemble de caractères connus est équivalent à la réunion de tout l'ensemble de caractères candidats.

3. Procédé d'authentification selon la revendication 1, dans lequel chaque région interactive (31-34) est utilisée pour recevoir une action tactile de l'utilisateur afin de confirmer cette action à titre d'instructions de sélection, par l'utilisateur, d'une région interactive correspondante (31-34).

4. Procédé d'authentification selon la revendication 1, dans lequel chaque région interactive (31-34) est associée à un circuit d'entrée correspondant (2), et la mise sous tension de chaque circuit d'entrée (2) est transformée en instructions de sélection d'une région interactive (31-34) associée au circuit d'entrée (31-34).

5. Procédé d'authentification selon la revendication 1, dans lequel, en correspondance avec n'importe quel caractère de l'ensemble de caractères connus, lorsqu'il est contrôlé que le caractère courant n'est pas inclus dans le sous-ensemble de caractères candidats correspondant à une région interactive spécifique (31-34) actuellement sélectionnée par l'utilisateur, il est mis fin au procédé pour arrêter d'exécuter les étapes successives.

6. Dispositif d'authentification servant à réaliser le procédé selon l'une quelconque des revendications précédentes 1-3 et 5, comprenant une unité de commande (1), une unité de mémoire (5) et un écran tactile (3), ladite unité de mémoire (5) stockant le mot de passe prédéfini contenant l'ensemble de caractères connus, dans lequel l'unité de commande (1) est destinée à exécuter un programme mettant en oeuvre ledit procédé ; l'unité de mémoire (5) est destinée à stocker le programme mettant en oeuvre ledit procédé ; et l'écran tactile (3) est destiné à fournir lesdites régions interactives (31-34) au programme mettant en oeuvre ledit procédé, à recevoir la sélection, par l'utilisateur, des régions interactives (31-34) et à transformer ladite sélection en instructions indiquant la sélection des régions interactives spécifiques (31-34).
